# EUROPÄISCHE PATENTSCHRIFT

(11) **EP 2 226 180 B1**
(45) Veröffentlichungstag und Bekanntmachung des Hinweises auf die Patenterteilung: **04.07.2012**
(21) Anmeldenummer: 10154604.2
(22) Anmeldetag: 25.02.2010
(51) Int. Cl.: B29C 49/64, B29C 49/68, B29C 35/08

(54) **Vorrichtung sowie Verfahren zum Erwärmen von Kunststoffvorformlingen mit teiltransparentem Strahler**
Apparatus and method of heating plastic preforms with partially transparent emitter
Appareil et procédé de chauffage de préformes en plastique doté d'un dispositif de rayonnement partiellement transparent

(30) Priorität: 05.03.2009 DE 102009011361
(43) Veröffentlichungstag der Anmeldung: 08.09.2010
(73) Patentinhaber: Krones AG, 93073 Neutraubling (DE)
(72) Erfinder: Senn, Konrad, 93059 Regensburg (DE)
(74) Vertreter: Bittner, Bernhard

(56) Entgegenhaltungen:
- EP-A2- 1 108 513
- WO-A1-01/62463
- DE-A1-102007 031 771

## Beschreibung

Die vorliegende Erfindung bezieht sich auf eine \/orrichtung und ein Verfahren zum Erwärmen von Kunststoffbehältnissen und, insbesondere, von Kunststoffvorformlingen. Aus dem Stand der Technik ist es bekannt, Kunststoffvorformlinge in Blasstationen zu Kunststoffbehältnissen umzuformen. Zu diesem Zweck werden die Kunststoffbehältnisse vor dem eigentlichen Blasvorgang erwärmt, um auf diese Weise expandiert werden zu können.

Aus dem Stand der Technik sind diverse Erwärmungsvorrichtungen bzw. Öfen bekannt, welche derartige Kunststoffvorformlinge erwärmen. Dabei sind aus dem Stand der Technik unterschiedliche Vorgehensweisen zum Erwärmen der Vorformlinge bekannt. Einerseits sind Mikrowellenöfen bekannt, welche zur Erwärmung der Kunststoffvorformlinge Mikrowellen einsetzen. Daneben sind jedoch auch Infrarotöfen bekannt, welche unter Einsatz von Wärmestrahlung die Behältnisse erwärmen.

Bei den bisher gängigen Verfahren wird der Kunststoffvorformling mit IR-Strahlern (Infrarot) mit einem kontinuierlichen plankartigen Strahlungsspektrum bestrahlt. Der Vorteil hierbei ist der hohe Wirkungsgrad der Strahlungsquelle, der annähernd bei 100 % liegt. Ein Nachteil dieser Vorgehensweise besteht darin, dass der Vorformling nicht jede Wellenlänge gleich aufnimmt. So existieren beispielsweise Wellenlängen, in denen unbehandeltes PET annähernd transparent ist, wie beispielsweise bei einer Wellenlänge von ca. 1000 nm. Bei anderen Wellenlängen ist der Kunststoffvorformling, sofern er aus PET hergestellt ist, im Wesentlichen vollkommen undurchlässig wie zum Beispiel bei 2300 nm und wieder anderen Bereichen ist er teiltransparent.

Ein Nachteil dieser genannten IR-Strahler besteht darin, dass sie einen sehr hohen Energiebedarf aufweisen. Andererseits können jedoch auch nicht alle Wellenlängen des Strahlers in gleicher Weise genutzt werden.

Aus der DE 10 2006 015853 A1 ist ein Erwärmungsverfahren für Kunststoffe und andere Materialien mit einer Infrarotvorrichtung bekannt. Dabei sind wenigstens zwei Strahler vorgesehen, welche auf Basis ein und derselben Funktionalkeramik mit einem selektiven Infrarot eingesetzt werden, wobei deren Emissionsspektren mit den Absorptionsspektren der zu erwärmenden Materialien weitestgehend übereinstimmen. In diesem Fall wird daher versucht, dass möglichst viel Strahlung von den Kunststoffvorformlingen aufgenommen wird. Dies führt jedoch dazu, dass es teilweise nur an der Oberfläche der Kunststoffvorformlinge zu deren Erwärmung kommt, nicht jedoch in den Innenbereichen des Materials.

Aus der DE 20 2008 005252 U1 ist nur eine Lampenvorrichtung für die Strahlungserwärmung von Vorformlingen bekannt. Dabei ist ein Reflektor vorgesehen, der sich bezüglich einer Umfangsrichtung einer durch die Strahlungsquelle verlaufenden Achse umfangsmäßig über einen Winkel erstreckt, der größer als 200° ist.

Die DE 38 23 670 A1 beschreibt ein Verfahren zum Erwärmen von Vorformlingen mit mindestens einer Strahlung emittierenden Heizung, deren Strahlung zumindest auch in Richtung auf den zu erwärmenden Vorformling ausgerichtet ist. Dabei wird der Vorformling mit einer seiner Wandung in deren Innenbereich gleich stark wie in ihrem Außenbereich aufheizenden Strahlung angestrahlt.

Der vorliegenden Erfindung liegt die Aufgabe zugrunde, die aus dem Stand der Technik bekannten Öfen energieeffizienter auszugestalten. Weiterhin soll ein innovatives energiesparendes Verfahren zur Vorformlingerwärmung insbesondere für den Streckblasprozess bei Getränkeflaschen zur Verfügung gestellt werden.

Diese Aufgaben werden erfindungsgemäß durch den Gegenstand von Ansprüchen 1 und 11 erreicht. Vorteilhafte Ausführungsformen und Weiterbildungen sind Gegenstand der Unteransprüche. Eine erfindungsgemäße Vorrichtung zum Erwärmen von Kunststoffbehältnissen weist eine Transporteinrichtung auf, welche die Behältnisse entlang eines vorgegebenen Transportpfades transportiert. Weiterhin ist wenigstens eine Heizeinrichtung zum Erwärmen dieser Kunststoffbehältnisse vorgesehen, wobei die Heizeinrichtung wenigstens eine Strahlungsquelle aufweist, welche Strahlung auf die Kunststoffbehältnisse richtet. Weiterhin ist wenigstens ein erstes Reflektorelement vorgesehen, welches von der Strahlungsquelle ausgehende Strahlung reflektiert.

Erfindungsgemäß weist die Vorrichtung eine Anteilsreflektionseinrichtung auf, welche von der Strahlungsquelle ausgehende Strahlung mit Wellenlängen in einem ersten vorgegebenen Wellenlängenbereich auf das Behältnis transmittert und Strahlen mit Wellenlängen in einem zweiten vorgegebenen Wellenlängenbereich zurück auf die Strahlungsquelle reflektiert, um diese zusätzlich zu erwärmen. Unter einer Strahlungsquelle wird insbesondere eine Lichtquelle verstanden, welche infrarotes Licht aussendet. Diese Strahlung wird dabei auf die Kunststoffbehältnisse gerichtet, wobei es möglich ist, dass die Strahlung direkt von der Strahlungsquelle auf die Kunststoffbehältnisse gelangt oder auch dass die Strahlung zunächst auf das Reflektorelement und anschließend von diesem auf die Kunststoffbehältnisse gelangt.

Bei dem ersten Reflektorelement handelt es sich insbesondere um ein Reflektorelement, welches die von der Strahlungsquelle ausgehende Strahlung vollständig auf die Strahlungsquelle oder das Behältnis selbst reflektiert um auf diese Weise insgesamt den Austritt an Strahlung zu erhöhen. Derartige Reflektorelemente sind aus dem Stand der Technik bekannt. Durch die erfindungsgemäße Anteilsreflektionseinrichtung wird erreicht, dass ein Teil der ausgesendeten Strahlung, insbesondere diejenige Strahlung, die nicht zum Erwärmen des Kunststoffbehältnisses verwendet werden kann, wieder zurück auf die Strahlungsquelle gelangt und diese damit zusätzlich erwärmt.

Auf diese Weise kann die gesamte Vorrichtung energieeffizienter verwendet werden. So wird beispielsweise in demjenigen Wellenbereich, in dem der Kunststoff, beispielsweise PET, transparent ist, nur sehr wenig Energie der Strahlung von dem Kunststoffvorformling aufgenommen, d. h. die Strahlung durchquert den Kunststoffvorformling einfach und somit wird der Kunststoffvorformling nicht erwärmt. Auch in dem vollständig undurchlässigen Bereich wird ein Teil der Strahlung reflektiert und ein Teil in der Oberfläche des Kunststoffvorformlings absorbiert, was wiederum zu einer starken Erwärmung der Oberfläche und somit zu einer ungleichmäßigen Erwärmung des Kunststoffvorformlings führt. Insbesondere in einem teiltransparenten Bereich ist die Durchwärmung des Kunststoffvorformlings annähernd gleichmäßig und gleichzeitig wird auch genügend Energie an den Kunststoffvorformling abgegeben.

Vorzugsweise umgibt das erste Reflektorelement die Strahlungsquelle wenigstens teilweise, wie an sich aus dem Stand der Technik bekannt.

Vorzugsweise reflektiert die Anteilsreflektionseinrichtung die Strahlung in einem zweiten vorgegebenen Wellenbereich zurück auf die Strahlungsquelle. Dabei ist es möglich, dass die Strahlung unmittelbar auf die Strahlungsquelle reflektiert wird, was auch bevorzugt ist, es wäre jedoch auch möglich, dass die Strahlung mittelbar, beispielsweise über das erste Reflektorelement, auf die Strahlungsquelle reflektiert wird.

Bei einer bevorzugten Ausführungsform ist die besagte Anteilsreflektionseinrichtung einteilig ausgeführt, es wäre jedoch auch möglich, dass sich diese Anteilsreflektionseinrichtung aus zwei Komponenten zusammensetzt, nämlich einerseits einem beispielsweise transmittierendem Glas und andererseits einem Reflektorelement, wobei die Behältnisse zwischen diesem transmittierendem Glas und dem Reflektorelement angeordnet sind. So wäre es beispielsweise möglich, dass diese Antireflektionseinrichtung eine so genannte IRC-Beschichtung (Infraredcoating) aufweist. Eine derartige Schicht kann beispielsweise die Wärme, die von einem Glühwendel als Infrarotstrahlen emittiert wird, reflektieren und auf diese Weise wiederum zur Erwärmung der Strahlungsquelle beitragen. Gleichzeitig wird jedoch sichtbares Licht transmittiert. Auf diese Weise wird weniger Energie benötigt, um die Wendel der Strahlungsquelle auf Temperatur zu halten und gleichzeitig bleibt die Lichtausbeute gleich, was in Summe zu einer Effizienzsteigerung führt.

Die vorliegende Erfindung verwendet eine ähnliche Technologie, wobei hierbei jedoch nicht primär Licht im sichtbaren Bereich transmittiert wird, sondern Licht in denjenigen Bereichen, in denen die Kunststoffbehältnisse eine gewisse Absorption aufweisen. Genau genommen sollen die von dem Kunststoffvorformling schlecht genutzten Wellenlängen wieder zurück auf die Strahlungsquelle geworfen werden und im Idealfall nur diejenigen Wellenlängen im teiltransparenten Bereich auf den Kunststoffvorformling einwirken. Dies führt dazu dass, wie oben erwähnt, die Strahlungsquelle weniger Energie benötigt, um auf Temperatur gebracht zu werden und der Kunststoffvorformling muss andererseits nicht so stark an der Oberfläche gekühlt werden.

Bei einer vorteilhaften Ausführungsform reflektiert daher die Anteilsreflektionseinrichtung die Strahlung in einem zweiten vorgegebenen Wellenlängenbereich zurück auf die Strahlungsquelle, um diese zusätzlich zu erwärmen.

Bei einer vorteilhaften Ausführungsform ist diese Anteilsreflektionseinrichtung in einem direkten Strahlengang zwischen der Strahlungsquelle und dem Behältnis angeordnet. Wie oben erwähnt, kann sich jedoch die Anteilsreflektionseinrichtung auch aus mehreren Komponenten zusammensetzen, wobei eine dieser Komponenten beispielsweise in dem besagten direkten Strahlengang angeordnet ist und die andere Komponente hinter dem Behältnis.

Damit ist jedoch bevorzugt die Antireflektionseinrichtung zwischen der Strahlungsquelle und dem Behältnis vorgesehen.

Bei einer weiteren vorteilhaften Ausführungsform enthält der erste Wellenlängenbereich Wellenlängen, für die eine Transmission des Materials des Behältnisses zwischen 10% und 90%, vorzugsweise zwischen 20% und 80% und besonders bevorzugt zwischen 30% und 70% liegt. Dies ist zunächst überraschend, da man davon ausgehen müsste, dass diejenigen Wellenlängen gewählt werden, in denen das Kunststoffmaterial des Behältnisses stark absorbiert. Diese starke Absorption führt jedoch wie oben erwähnt hierzu, dass nur Oberflächen der Behältnisse stark erwärmt und sogar überhitzt werden. Daher wählt man bei dieser Ausführungsform bewusst Wellenlängen, die von dem besagten Kunststoff teilweise transmittiert werden.

Vorzugsweise liegt der erste Wellenlängenbereich zwischen 1700 nm und 2100 nm. Dieser Wellenlängenbereich hat sich im Rahmen einer Vielzahl von Experimenten als besonders vorteilhaft herausgestellt, insbesondere wenn die Kunststoffbehältnisse aus PET hergestellt sind.

Bei einer vorteilhaften Ausführungsform weist die Strahlungsquelle selbst eine teiltransparente Beschichtung auf, wobei insbesondere nur ein Teil der besagten Strahlungsquelle teiltransparent ist und der andere das gesamte Spektrum reflektiert, da nur auf einer Seite des Strahlers die Kunststoffbehältnisse vorbei bewegt werden. Es wäre jedoch auch möglich, dass die Kunststoffbehältnisse an zwei Seiten der Strahlungsquelle vorbei bewegt werden.

Bei einer weiteren Ausführungsform ist, wie oben erwähnt, die Anteilsreflektionseinrichtung zweiteilig ausgebildet. Dabei ist einerseits zwischen dem Behältnis und der Strahlungsquelle eine teiltransparente Scheibe vorgesehen, welche eine Transmission derjenigen Wellenlängen erlaubt, die zur Erwärmung des Kunststoffvorformlings verwendet werden. Die übrigen Wellenlängen werden von dieser teiltransparenten Scheibe absorbiert oder in beliebige Raumrichtungen reflektiert und tragen auf diese Weise, wenn auch geringfügiger, zur Erwärmung der Strahlungsquelle bei. Die von dem Reflektor reflektierte Strahlung wiederum gelangt wieder zumindest teilweise zurück auf die Strahlungsquelle und trägt zu deren Erwärmung bei. Es wird jedoch darauf hingewiesen, dass bei dieser Ausführungsform der Haupteffekt darin besteht, dass das Behältnis mit den genau angepassten Wellenlängen erwärmt wird und auf diese Weise insbesondere eine Überhitzung der Oberfläche verhindert wird. Die ebenfalls vorteilhafte Erwärmung der Strahlungsquelle wird hier nur teilweise erreicht.

Vorzugsweise weist der zweite Wellenlängenbereich Wellenlängen auf, welche geringer sind als die Wellenlängen des ersten Wellenlängenbereichs. Bei einer weiteren vorteilhaften Ausführungsform weist der zweite Wellenlängenbereich Wellenlängen auf, welche größer sind als die Wellenlängen des ersten Wellenlängenbereichs. Idealerweise werden lediglich diejenigen Wellenlängen transmittiert, die zur Erwärmung des Preforms verwendet werden und Wellenlängen außerhalb dieses Abschnitts werden reflektiert. Damit ist vorzugsweise die beschriebene Teiltransparenz derart geartet, dass der Großteil der nicht transmittierten Strahlung reflektiert wird und möglichst wenig in der Anteilsreflektionseinrichtung bzw. deren Beschichtung absorbiert wird.

Da die Herstellung einer Schicht, die sowohl lang- als auch kurzwelliges Licht reflektiert und nur einen mittleren Teil transmittiert, teilweise technisch aufwendig ist, wäre es auch denkbar, dass die Anteilsreflektionseinrichtung zwei Filterelemente aufweist, nämlich einen Langpass und einen Kurzpass. Diese Schichten könnten dabei beispielsweise übereinander angeordnet sein. Weiterhin wäre es auch möglich, dass nur ein Langpass verwendet wird und die kurzwellige Strahlung, bei der PET meist eine hohe Transmission aufweist über Reflektoren hinter den Behältnissen wieder auf die Behältnisse geworfen werden und erst dann wieder auf die Strahlungsquelle gelangen.

Bei einer weiteren vorteilhaften Ausführungsform ist die Strahlungsquelle stationär angeordnet. Dabei ist es möglich, dass die Vorrichtung eine Vielzahl von Strahlungsquellen aufweist, die entlang des Transportpfades hintereinander angeordnet sind und auf diese Weise die Behältnisse entlang ihrer Bewegung auf dem Pfad erwärmt werden.

Bei einer weiteren vorteilhaften Ausführungsform weist die Vorrichtung eine Reflektoreinrichtung auf, wobei das Behältnis zwischen der weiteren Reflektoreinrichtung und der Strahlungsquelle transportiert wird. Dies bedeutet, dass aus Sicht der Strahlungsquelle hinter dem Behältnis diese weitere Reflektoreinrichtung angeordnet ist. Dabei kann auch diese weitere Reflektoreinrichtung ein parabolisches oder gekrümmtes Profil aufweisen, damit die von dieser Reflektoreinrichtung zurück geworfene Strahlung auf die Strahlungsquelle fokussiert wird.

Bei einer weiteren vorteilhaften Ausführungsform ist eine Vielzahl von Strahlungsquellen in einer Längsrichtung des Behältnisses angeordnet, so dass das Behältnis und insbesondere der Kunststoffvorformling von oben nach unten im Wesentlichen vollständig erwärmt wird. Bevorzugt sind diese Strahlungsquellen jedoch derart angeordnet, dass die Mündungen der Behältnisse nicht oder nur geringfügig erwärmt werden.

Die vorliegende Erfindung ist weiterhin auf eine Anlage zur Herstellung von Kunststoffbehältnissen gerichtet, wobei diese Anlage eine Vorrichtung der oben beschriebenen Art und eine in der Transportrichtung der Behältnisse stromabwärts bezüglich dieser Vorrichtung angeordnete Einrichtung zur Blasumformung von Kunststoffvorformlingen in Behältnisse aufweist.

Die vorliegende Erfindung ist weiterhin auf ein Verfahren zum Erwärmen von Kunststoffbehältnissen und insbesondere von Kunststoffvorformlingen gerichtet, wobei die Kunststoffbehältnisse entlang eines vorgegebenen Transportpfads transportiert werden und dabei die Kunststoffbehältnisse mittels einer ersten Strahlungsquelle, welche Strahlung auf die Kunststoffbehältnisse richtet erwärmt werden. Erfindungsgemäß wird von der Strahlungsquelle ausgehende Strahlung mit Wellenlängen in einem ersten vorgegebenen Wellenlängenbereich auf das Behältnis gerichtet und von der Strahlungsquelle ausgehende Strahlung mit Wellenlängen in einem zweiten vorgegebenen Wellenlängenbereich wird von einer Anteilsreflektionseinrichtung reflektiert bzw. nicht transmittiert und auf die Strahlungsquelle reflektiert, um diese zusätzlich zu erwärmen.

Bevorzugt enthält der erste Wellenlängenbereich Wellenlängen, für die eine Transmission des Materials des Kunststoffbehältnisses zwischen 10 % und 90 %, vorzugsweise zwischen 20 % und 80 % und besonders bevorzugt zwischen 30 % und 70 % liegt. Eben dieser Bereich mittlerer Transmission ist besonders geeignet zur Erwärmung der Kunststoffbehältnisse.

Weitere Vorteile und Ausführungsformen ergeben sich aus den beigefügten Zeichnungen:
Darin zeigen:
   - Fig. 1: Eine Schnittdarstellung einer erfindungsgemäßen Vorrichtung zum Erwärmen von Kunststoffbehältnissen;
   - Fig. 2: eine schematische Darstellung einer Strahlungseinrichtung für eine erfin- dungsgemäße Vorrichtung;
   - Fig. 3: eine weitere vorteilhafte Ausführungsform einer erfindungsgemäßen Strah- lungseinrichtung; und
   - Fig. 4: ein Diagramm zur Veranschaulichung von Transmissionen am Beispiel des Kunststoffs PET.

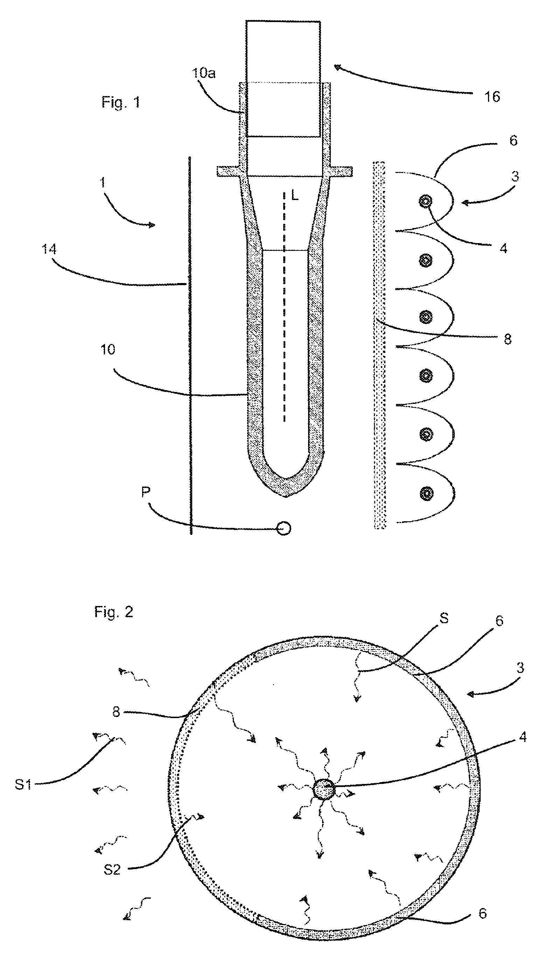

Fig. 1 zeigt eine Schnittdarstellung einer erfindungsgemäßen Vorrichtung 1 zum Erwärmen von Behältnissen. Dabei ist ein Behältnis 10 gezeigt, welches von einer Transporteinrichtung 16, welche in eine Mündung 10a des Behältnisses eingreift, transportiert wird und so hier entlang eines Transportpfades P, der sich senkrecht zu der Figurenebene erstreckt transportiert wird. Diese Vorrichtung 1 weist eine Vielzahl von Strahlungsquellen 4 auf, die wiederum Bestandteil von in ihrer Gesamtheit mit 3 bezeichneten Strahlungseinrichtungen sind. Diese Strahlungsquellen sind hier entlang einer Längsrichtung L des Behältnisses 10 vorgesehen. Das Bezugszeichen 6 bezieht sich auf eine Reflektoreinrichtung, die die von der Strahlungsquelle 4 ausgehende Strahlung reflektiert und dabei insbesondere wieder zurück zu der Strahlungsquelle 4 selbst reflektiert. Weiterhin wird jedoch diese Strahlung auch in Richtung der Behältnisse 10 reflektiert.

Das Bezugszeichen 8 kennzeichnet eine Anteilsreflektionseinrichtung, die sich entlang der gesamten Länge L des Behältnisses 10 und auch entlang aller Strahlungsquellen 4 erstreckt. Diese Anteilsreflektionseinrichtung transmittiert Strahlung in einem Wellenlängenbereich, der zur Erwärmung der Behältnisse 10 geeignet ist und reflektiert solche Strahlung, die außerhalb dieses besagten Wellenlängenbereichs liegt, zurück zu den Strahlungsquellen 4.

Fig. 2 zeigt eine schematische Darstellung einer erfindungsgemäßen Strahlungseinrichtung 3. Auch hier ist wieder ein erstes Reflektorelement 6 vorgesehen, welches die Strahlungsquelle 4 in Umfangsrichtung teilweise umgibt, so wie die Anteilsreflektionseinrichtung 8, die in denjenigen Bereich angeordnet ist, in dem die Strahlung S aus der Strahlungseinrichtung 3 austreten soll. Bei der in Fig. 2 gezeigten Ausführungsform erstreckt sich das Reflektorelement 6 um einen Winkel von ca. 240° um die Strahlungsquelle 4 und die Anteilsreflektionseinrichtung erstreckt sich um einen Winkel von ca. 120°. Strahlung mit der Strahlungskomponente S2 wird von dieser Anteilsreflektionseinrichtung, wie in Fig. 2 gezeigt, zurück auf die Strahlungsquelle 4 reflektiert, wo hingegen der Anteil S1 der Strahlung S nach außen gelangt und somit auf das in Fig. 1 gezeigte Behältnis.

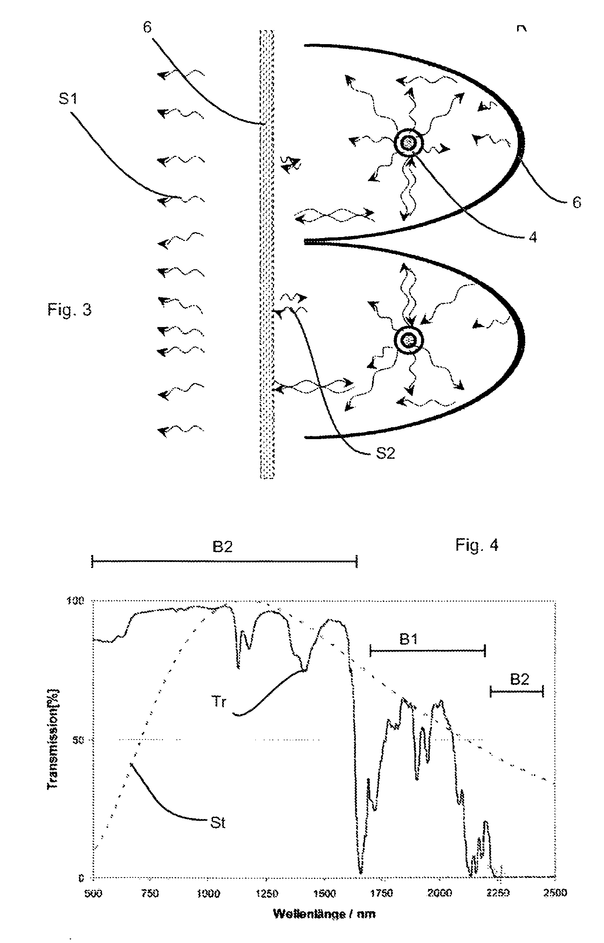

Fig. 3 zeigt eine vergrößerte Darstellung der in Fig. 1 gezeigten Vorrichtung. Man erkennt auch hier wieder, dass bestimmte Strahlungsanteile S2 zurück zu der Strahlungseinrichtung 4 reflektiert werden und andere Strahlungsanteile S1 auf das (nicht gezeigte) Behältnis gelangen.

Fig. 4 zeigt einen schematischen Transmissionsverlauf für PET. Man erkennt, dass die Transmission von PET in einem Wellenlängenbereich bis ca. 1600 Nanometern sehr hoch ist, die Transmission anschließend stark absinkt und in einem Bereich zwischen 1600 Nanometern und 2100 Nanometern sich zwischen ca. 30 und 70 % bewegt. Dieser Bereich B1 besonders geeignet, um die PET-Behältnisse zu erwärmen. Das Bezugszeichen St kennzeichnet einen Verlauf bei einer Strahltemperatur von 2500 K.

Der Bereich B2 wird daher vorzugsweise zurück auf die Strahlungsquelle 4 reflektiert und trägt auf diese Weise zur Erwärmung der Strahlungsquelle und damit zur Energieeinsparung bei. Andererseits wird dieser linke Bereich B2 zwischen 500 und 1600 nm nicht auf die Behältnisse gerichtet, da er von diesen ohne größere Effekte, d. h. insbesondere ohne größere Heizeffekte transmittiert werden würde. Der zweite Bereich B2 mit Wellenlängen über 2100 Nanometern gelangt ebenfalls nicht auf die Behältnisse, da er deren Wandung sehr stark erhitzen würde und diesem Falle die Kunststoffvorformlinge beschädigt werden könnten.

### Bezugszeichenliste

- 1: Vorrichtung
- 3: Strahlungseinrichtung
- 4: Strahlungsquelle
- 6: Reflektoreinrichtung
- 8: Anteilsreflektionseinrichtung
- 10: Behältnis
- 10a: Mündung
- 16: Transporteinrichtung
- B1: erster Bereich
- B2: zweiter Bereich
- P: Transportpfad
- S: Strahlung
- S1/S2: Strahlungskomponente
- L: Längsrichtung

## Patentansprüche

1. Vorrichtung (1) zum Erwärmen von Kunststoffbehältnissen (10) mit einer Transporteinrichtung, welche die Behältnisse entlang eines vorgegebenen Transportpfads (P) transportiert und mit wenigstens einer Heizeinrichtung (2) zum Erwärmen dieser Kunststoffbehältnisse (10), wobei die Heizeinrichtung wenigstens eine Strahlungsquelle (4) aufweist, welche Strahlung auf die Kunststoffbehältnisse richtet, sowie wenigstens ein erstes Reflektorelement (6), welches von der Strahlungsquelle ausgehende Strahlung reflektiert, wobei
die Vorrichtung eine Anteilsreflektionseinrichtung (8) aufweist, welche von der Strahlungsquelle (4) ausgehende Strahlung mit Wellenlängen in einem ersten vorgegebenen Wellenlängenbereich (B1) auf das Behältnis (10) transmittiert **dadurch gekennzeichnet, dass** die Anteilsreflektionseinrichtung (8) die Strahlung mit Wellenlängen in einem zweiten vorgegebenen Wellenlängenberech (B2) zurück auf die Strahlungsquelle (4) reflektiert, um diese zusätzlich zu erwärmen.

2. Vorrichtung (1) nach Anspruch 1,
**dadurch gekennzeichnet, dass**
die Anteilsreflektionseinrichtung (8) in einem direkten Strahlengang zwischen der Strahlungsquelle (4) und dem Kunststoffbehältnis (10) angeordnet ist.

3. Vorrichtung nach wenigstens einem der vorangegangenen Ansprüche,
**dadurch gekennzeichnet, dass**
die Anteilsreflektionseinrichtung (8) zwischen der Strahlungsquelle (4) und dem Kunststoffbehältnis (10) angeordnet ist.

4. Vorrichtung nach wenigstens einem der vorangegangenen Ansprüche,
**dadurch gekennzeichnet, dass**
der erste Wellenlängenbereich (B1) Wellenlängen enthält, für die eine Transmission des Materials des Behältnisses zwischen 10% und 90%, vorzugsweise zwischen 20% und 80% und besonders bevorzugt zwischen 30% und 70% liegt.

5. Vorrichtung nach wenigstens einem der vorangegangenen Ansprüche,
**dadurch gekennzeichnet, dass**
der erste Wellenlängenbereich (B1) zwischen 1700 nm und 2100 nm liegt.

6. Vorrichtung nach wenigstens einem der vorangegangenen Ansprüche,
**dadurch gekennzeichnet, dass**
der zweite Wellenlängenbereich (B2) Wellenlängen aufweist, welche kürzer sind als die Wellenlängen des ersten Wellenlängenbereichs (B1).

7. Vorrichtung nach wenigstens einem der vorangegangenen Ansprüche,
**dadurch gekennzeichnet, dass**
der zweite Wellenlängenbereich (B2) Wellenlängen aufweist, welche größer sind als die Wellenlängen des ersten Wellenlängenbereichs (B1).

8. Vorrichtung nach wenigstens einem der vorangegangenen Ansprüche,
**dadurch gekennzeichnet, dass**
die Strahlungsquelle (4) stationär angeordnet ist.

9. Vorrichtung nach wenigstens einem der vorangegangenen Ansprüche,
**dadurch gekennzeichnet, dass**
die Vorrichtung (1) eine weitere Reflektoreinrichtung (14) aufweist, wobei das Behältnis zwischen der weiteren Reflektoreinrichtung (14) und der Strahlungsquelle (4) transportiert wird.

10. Vorrichtung nach wenigstens einem der vorangegangenen Ansprüche,
**dadurch gekennzeichnet, dass**
eine Vielzahl von Strahlungsquellen (4) in einer Längsrichtung (L) des Behältnisses (10) angeordnet ist.

11. Verfahren zum Erwärmen von Kunststoffbehältnissen (10) und, insbesondere, von Kunststoffvorformlingen, wobei die Kunststoffbehältnisse (10) entlang eines vorgegebenen Transportpfads (P) transportiert werden und wobei die Kunststoffbehältnisse (10) mittels einer ersten Strahlungsquelle (4), welche Strahlung auf die Kunststoffbehältnisse (10) richtet, erwärmt werden, wobei
von der Strahlungsquelle (4) ausgehende Strahlung mit Wellenlängen in einem ersten vorgegebenen Wellenlängenbereich (B1) auf das Behältnis (10) gerichtet wird, **dadurch gekennzeichnet, dass** von der Strahlungsquelle (4) ausgehende Strahlung mit Wellenlängen in einem zweiten vorgegebenen Wellenlängenbereich (B2) zurück auf die Strahlungsquelle (4) reflektiert wird, um diese zusätzlich zu erwärmen.

12. Verfahren nach Anspruch 11,
**dadurch gekennzeichnet, dass**
der erste Wellenlängenbereich (B1) Wellenlängen enthält, für die eine Transmission des Materials des Behältnisses zwischen 10% und 90%, vorzugsweise zwischen 20% und 80% und besonders bevorzugt zwischen 30% und 70% liegt.

## Claims

1. Apparatus (1) for heating plastic receptacles (10) with a transport device which transports the receptacles along a predetermined transport path (P) and with at least one heating device (2) for heating these plastic receptacles (10), wherein the heating device has at least one radiation source (4) which directs radiation at the plastic receptacles, and at least one first reflector element (6) which reflects radiation emitted by the radiation source (4), wherein the apparatus has a proportional reflection device (8) which transmits radiation emitted by the radiation source (4) with wavelengths in a first predetermined wavelength range (B1) onto the receptacle (10) **characterised in that** the proportional reflection device reflects radiation with wavelengths in a second predetermined wavelength range (B2) back onto the radiation wave to heat it additionally.

2. Apparatus (1 ) according to claim 1, **characterised in that** the proportional reflection device (8) is arranged in a direct beam path between the radiation source (4) and the plastic receptacle (10).

3. Apparatus according to at least one of the preceding claims, **characterised in that** the proportional reflection device (8) is arranged between the radiation source (4) and the plastic receptacle (10).

4. Apparatus according to at least one of the preceding claims, **characterised in that** the first wavelength range (B1) contains wavelengths for which the transmission of the receptacle material is between 10% and 90%, preferably between 20% and 80% and particular preferably between 30% and 70%.

5. Apparatus according to claim 6, **characterised in that** the first wavelength range (B1) is between 1700 nm and 2100 nm.

6. Apparatus according to at least one of the preceding claims, **characterised in that** the second wavelength range (B2) contains wavelengths which are shorter than the wavelengths of the first wavelength range (B1).

7. Apparatus according to at least one of the preceding claims, **characterised in that** the second wavelength range (B2) contains wavelengths which are longer than the wavelengths of the first wavelength range (B1).

8. Apparatus according to at least one of the preceding claims, **characterised in that** the radiation source (4) is arranged stationary.

9. Apparatus according to at least one of the preceding claims, **characterised in that** the apparatus (1) has a further reflector device (14), where the receptacle is transported between the further reflector device (14) and the radiation source (4).

10. Apparatus according to at least one of the preceding claims, **characterised in that** a multiplicity of radiation sources (4) is arranged in a longitudinal direction (L) of the receptacle (10).

11. Method for heating plastic receptacles (10) and in particular plastic preforms, wherein the plastic receptacles (10) are transported along a predetermined transport path (P) and wherein the plastic receptacles (10) are heated by means of a first radiation source (4) which directs radiation at the plastic receptacles (10), wherein the radiation emitted by the radiation source (4) with wavelengths in a first predetermined wavelength range (B1) is directed at the receptacle (10) **characterised in that** radiation emitted by the radiation source (4) with wavelengths in a second predetermined wavelength range (B2) is reflected onto the radiation source (4) to additionally heat it.

12. Method according to claim 12, **characterised in that** the first wavelength range (B1) contains wavelengths for which a transmission of the receptacle material is between 10% and 90%, preferably between 20% and 80% and particularly preferably between 30% and 70%.

## Revendications

1. Installation (1) pour le chauffage de récipients en matière plastique (10), avec un dispositif de transport qui transporte les récipients le long d'un trajet de transport (P) défini, et avec au moins un dispositif de chauffage (2) pour le chauffage desdits récipients en matière plastique (10), le dispositif de chauffage comportant au moins une source de rayonnement (4) dirigeant un rayonnement vers les récipients en matière plastique, ainsi qu'au moins un premier élément réflecteur (6) qui réfléchit le rayonnement provenant de la source de rayonnement,
ladite installation comportant un dispositif de réflexion partagée (8) qui transmet vers le récipient (10) un rayonnement provenant de la source de rayonnement (4) avec des longueurs d'onde comprises dans une première plage de longueurs d'onde (B1) définie,
**caractérisée**
**en ce que** le dispositif de réflexion partagée (8) réfléchit en le renvoyant vers la source de rayonnement (4) le rayonnement avec des longueurs d'onde comprises dans une deuxième plage de longueurs d'onde (B2) définie, pour chauffer celle-ci de manière complémentaire.

2. Installation (1) selon la revendication 1,
**caractérisée**
**en ce que** le dispositif de réflexion partagée (8) est disposé sur un trajet de rayonnement direct entre la source de rayonnement (4) et le récipient en matière plastique (10).

3. Installation selon au moins une des revendications précédentes,
**caractérisée**
**en ce que** le dispositif de réflexion partagée (8) est disposé entre la source de rayonnement (4) et le récipient en matière plastique (10).

4. Installation selon au moins une des revendications précédentes,
**caractérisée**
**en ce que** la première plage de longueurs d'onde (B1) comprend des longueurs d'onde pour lesquelles une transmission du matériau du récipient est comprise entre 10 % et 90 %, de préférence entre 20 % et 80 % et tout particulièrement entre 30 % et 70 %.

5. Installation au moins une des revendications précédentes,
**caractérisée**
**en ce que** la première plage de longueurs d'onde (B1) est comprise entre 1700 nm et 2100 nm.

6. Installation selon au moins une des revendications précédentes,
**caractérisée**
**en ce que** la deuxième plage de longueurs d'onde (B2) comprend des longueurs d'onde plus courtes que les longueurs d'onde de la première plage de longueurs d'onde (B1).

7. Installation selon au moins une des revendications précédentes,
**caractérisée**
**en ce que** la deuxième plage de longueurs d'onde (B2) comprend des longueurs d'onde plus grandes que les langueurs d'onde de la première plage de longueurs d'onde (B1).

8. Installation selon au moins une des revendications précédentes,
**caractérisée**
**en ce que** la source de rayonnement (4) est fixe.

9. Installation selon au moins une des revendications précédentes,
**caractérisée**
**en ce que** ladite installation (1) comporte un autre dispositif réflecteur (14), le récipient étant transporté entre le dispositif réflecteur (14) et la source de rayonnement (4).

10. Installation selon au moins une des revendications précédentes,
**caractérisée**
**en ce qu'**une pluralité de sources de rayonnement (4) est prévue dans une direction longitudinale (L) du récipient (10).

11. Procédé de chauffage de récipients en matière plastique (10) et en particulier d'ébauches en matière plastique, les récipients en matière plastique (10) étant transportés le long d'un trajet de transport (P) défini et les récipients en matière plastique (10) étant chauffés au moyen d'une première source de rayonnement (4), qui dirige le rayonnement vers les récipients en matière plastique (10),
un rayonnement provenant de la source de rayonnement (4) avec des longueurs d'onde comprises dans une première plage de longueurs d'onde (B1) définie étant dirigé vers le récipient (10),
**caractérisé**
**en ce qu'**un rayonnement provenant de la source de rayonnement (4) avec des longueurs d'onde comprises dans une première plage de longueurs d'onde (B2) définie est réfléchi vers la source de rayonnement (4) pour chauffer elle-ci de manière complémentaire.

12. Procédé selon la revendication 11,
**caractérisé**
**en ce que** la première plage de longueurs d'onde (B1) comprend des longueurs d'onde pour lesquelles une transmission du matériau du récipient est comprise entre 10 % et 90 %, de préférence entre 20 % et 80 % et tout particulièrement entre 30 % et 70 %.
